# EUROPEAN PATENT APPLICATION

(11) **EP 2 180 590 A1**
(43) Date of publication of application: **28.04.2010**
(21) Application number: 08167655.3
(22) Date of filing: 27.10.2008
(51) Int. Cl.: H02P 1/00

(54) **Turbo-pneumatic assist for electric motor starting**

(71) Applicant: GE Aviation Systems LLC, Grand Rapids, MI 49512-1991 (US)
(72) Inventor: Dipasquale, Charles, Jr., Pittsburg, PA 15211 (US)
(74) Representative: Bedford, Grant Richard

(57) **Abstract**

An electric motor prime mover (10) and method of starting an electric motor prime mover is provided. The prime mover includes an electric motor, a pneumatic motor and a mechanical coupling operably connecting the pneumatic motor to a rotor of the electric motor (18). The pneumatic motor initiates startup of the electric motor by driving the rotor of the electric motor prior to applying electrical power to the electric motor. After the rotor has attained sufficient rotational speed electricity is applied to the electric motor to drive the rotor. The use of the pneumatic motor (22) allows the rotor to be rotating as electricity is initially applied to the electric motor preventing or substantially reducing inrush currents.

## Description

This invention generally relates to prime movers and more particularly to devices for assisting startup of electric motor prime movers.

In today's industry, prime movers are used to provide motive power for operating other machines or mechanical systems. Typical prime movers include reciprocating combustion engines (gas and diesel), combustion gas turbines engines or electric motors. Reciprocating combustion engines and combustion gas turbine engines use fossil fuels and generate harmful exhaust emissions and many other by-products of combustion. With stricter government regulations on emissions and pollutants, ever increasing and volatile fissile fuel costs, the use of fossil fuel based prime movers are becoming less and less attractive. Besides pollution, exhaust emissions and costs of fuel, reciprocating engines and gas turbines generate sound pollution making them additionally difficult to employ proximate to communities or where facilities may be (more logically) needed. Additionally, fossil fuel based prime movers tend to have a much lesser service life, a myriad of moving parts, and have higher maintenance costs when compared to electric motor prime movers. Use of electric motors as prime movers can eliminate a large number of the problems associated with fossil fuel combustion powered prime movers.

Electric motors can provide mechanical power in excess of 20,000 horsepower. However, one problem with the use of high power electric motors is the initial startup energy and current draw results in-rush current used by the electric motor that can be upwards of 6-8 times the steady state energy required by the motor at fixed load current (FLC). This high startup energy consumption is caused, in part, by a large innish current experienced by the electric motor during startup as the armature of the motor accelerates from a dead stop condition. In a dead stopped or stationary condition, otherwise known as "locked rotor torque" (LRT), the electric motor acts much like a short circuit, thereby, demanding or experiencing a large inrush of current at start up. As the electric motor picks up rotational speed, it's power demand and current draw decreases rapidly and exponentially.

Also adding to the peak energy consumption at startup of these large horsepower electric motors is that the devices themselves as well as the driven devices may tend to be large and have very large rotary inertia. This large inertia acts against acceleration of the armature of the electric motor, and inhibits attainment of a steady state operating speed where the electric motor can operate at the much lower FLC. As such, it may take an extended period of time to accelerate the armature from rest to its steady state operating speed, where the electric motor operates at the FLC, thereby, exposing the electric motor to the inrush and higher rate currents for an extended period of time.

These high levels of energy consumption with high current flow can be problematic. Excessive current can cause overheating in the electrical supply system supplying power to the electric motor causing circuit breakers to trip. High currents passing through the motor can cause heat build up within the motor, resulting in reduced motor life. Costly Variable frequency drive (VFDs) and soft-start equipment and capacitors are often employed to handle this extra heat and prevent motor damage. Also, the inefficiency of "demand spikes" (exponentially higher power demand for electrical power) creates higher peak energy consumption and increased/excessive energy costs for all customers.

To compete against combustion power, electrical utilities must provide enough extra power capacity for equipment start-up, or otherwise risk knocking other electrical utility customers off the grid because of power failures caused by the peak energy consumption at equipment startup. The power failures lower the electrical utilities reliability factor in the market as a competing energy source. In fact, the terms "peakers" or "peak-shavers" refer to extra capacity or power generation capabilities utilities must often invest in to increase capacity to provide reliable electrical power during periods where power demand on the grid exceeds available supply. Users who choose electrical motors as prime movers must often wait until power grid infrastructure improvements by a utility can be completed until installing and using the electrical motors. This waiting time increases the time needed to install a facility or new equipment and may result in lost production. In addition, at the site level, customers must often oversize electrical supply components of their facilities and must pay utilities to upgrade the electrical supply grid, further increasing their capital costs.

Additionally, peak demand largely dictates the costs of electricity to users, even during steady state operation. Businesses that draw their peak power requirement, especially during high demand periods, can pay a double premium for electricity (peak demand usage rate and peak demand period rate adjustments). In most instances, the premium rates are applied to all of the electricity consumed by an electric motor even though this peak startup consumption only occurs for a short period of the overall operating life of the electric motor or a utility billing cycle.

Typically, a one minute start-up consumption rate determines the rate applied to entire billing period, potentially 720 hrs of operation at a 100% utilization after start-up. This penalty is often why large electric motors may be run continuously (unloaded) or off demand (to avoid peak-rate based start up consumption) lending to greater inefficiency. Overall, these peak demand factors can make the use of electric motors less efficient and less competitive with combustion prime mover alternatives.

Operations are seeking ways to minimize these costs. Similarly, utilities seek to better manage power distribution and capital outlays to service customers.

Further, these peak power demands can inhibit use of electrical motors in new industrial facilities in second tier industrialized countries if the power supplier does not have a sufficient power grid. Additionally, if the electrical grid supplying the starting electricity to the electric motor does not have enough available amperage capacity, the inrush current will cause a voltage drop on the utility line, creating a line disturbance. These line disturbances result in problems for other customers such as lights flickering or other more serious problems resulting in irritated customers and inconvenience for the electricity supply company.

However, used more efficiently, use of electric motors may have a number of significant advantages over combustion powered prime movers of the same output. This is especially true of larger (higher HP) prime movers.

There exists, therefore, a need in the art for an electric prime mover an apparatus that eliminates one or more of these problems associated with startup of an electric motor, as well as increasing the overall efficiency of using large electric motors as prime movers. Various embodiments of the invention provide such devices. These and other advantages of the invention, as well as additional inventive features, will be apparent from the description of the invention provided herein.

Various aspects and embodiments of the present invention provide a new and improved prime mover system and method that overcomes one or more of the above described and other problems existing in the art. Particularly, one aspect of the present invention provides a new electric motor prime mover that has reduced inrush currents when starting the electric motor. Another aspect of the invention provides a pneumatic starting assist system that assists startup of the electric motor to reduce the effects of the electric motor acting like a short-circuit upon activation. The pneumatic starting assist system operates on compressed gas rather than electricity. This reduces the large inrush currents and energy consumption typically associated with starting electric motors using electricity.

One embodiment of the invention provides a prime mover that includes an electric motor and a pneumatic motor for assisting startup of the electric motor. A mechanical drive system couples the pneumatic motor to the electric motor. More particularly, mechanical drive system couples the pneumatic motor to the armature of the electric motor.

The coupling may include gears, belts, chains/sprockets or a CVT. A clutch interposed within the drive system, between the pneumatic motor and the armature of the electric motor may allow the rotating components of the pneumatic motor to be selectively, rotationally isolated from the armature. Further, the clutch may be configured to allow the armature to overrun the rotational components of the pneumatic motor without allowing the armature to accelerate or drive the components of the pneumatic motor to prevent unnecessary wear on the components of the pneumatic motor.

A controller may be provided to control activation and deactivation of the pneumatic motor, allowing for synchronous timing/RPM set points as needed. The controller may be further configured to engage or disengage the clutch to either engage or prevent torque transmission between the pneumatic motor and the armature.

In one form, the new and improved method of starting an electric motor assists startup of the electric motor by initially rotating the armature of the electric motor without the use of electricity. This method reduces the peak initial electrical energy consumption and inrush currents experienced during startup of the electric motor prime movers. More particularly, the method includes activating a pneumatic motor and mechanically driving the armature of an electric motor with the pneumatic motor. After the armature is rotating via mechanical means, the armature is driven, at least in part, electrically. In a preferred method, the method includes activating the pneumatic motor and then operably coupling the pneumatic motor to the armature, such as by engaging a clutch. In another method, mechanically driving the armature originally occurs when no electricity is driving the armature. In a further method, after the electric motor is electrically driven, the pneumatic motor is deactivated, such as by means of a clutch or by preventing air flow through the pneumatic motor to prevent unnecessary wear and tear on the pneumatic motor.

Other aspects, objectives and advantages of the invention will become more apparent from the following detailed description when taken in conjunction with the accompanying drawings.

The accompanying drawings incorporated in and forming a part of the specification illustrate several aspects and embodiments of the present invention and, together with the description, serve to explain the principles of the invention. In the drawings:
FIG. 1 is a simplified illustration of an embodiment of an electric motor prime mover system according to the teachings of the present invention that is coupled to a load;
FIG. 2 is an exploded illustration of an embodiment of a pneumatic motor used in the prime mover system of FIG. 1; and
FIG. 3 is a flow diagram illustration the steps of a method of activating an electric prime mover system according to an aspect of the present invention.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

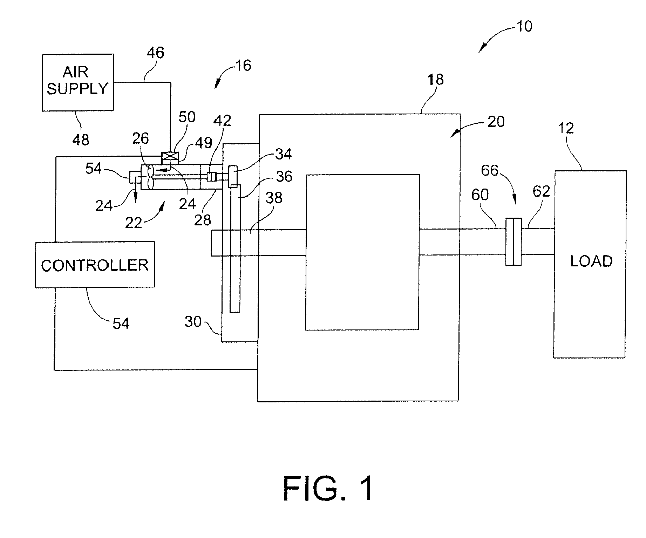

Referring to FIG.1, shown in simplified form is an embodiment of a prime mover system 10. The prime mover system 10 is operably coupled to and drive load 12. Load 12 can be any limiting load such as a compressor, a pump, a conveyor, a mill, grinder, etc. This list is not exhaustive or limiting and is provided by way of example only. The prime mover system 10 is an electric motor prime mover and includes an electric motor 18 for providing the motive power to drive load 12. As the prime mover system 10 includes electric motor 18 as the main source of motive power, the prime mover system 10 provides all of the ecological and maintenance benefits of an electricity based system. However, the embodiment of the prime mover system 10 beneficially eliminates many of the problems associated with using electric motor prime movers discussed previously. The prime mover system 10 eliminates or substantially reduces the problems associated with inrush currents and peak energy consumption during startup of the electric motor 18, as will be more fully explained below.

To eliminate or substantially reduce the problems during initial activation and startup of the electric motor 18, a pneumatic starting assist system 16 assists startup of the electric motor 18. As such, the pneumatic starting assist system 16 operably couples to the electric motor 18. The pneumatic starting assist system 16 initiates rotation of a rotor of the electric motor in the form of armature 20 of the electric motor 18 without requiring electricity to be applied to or passed through the electric motor 18. As will be more fully described below, in an embodiment, electricity to drive the electric motor 18 is applied only after the armature 20 is rotating and typically after the armature 20 has reached a predetermined rotational speed (an electricity application speed). This configuration substantially reduces the detrimental peak electrical power consumption and inrush current during startup as compared with electrically starting an electric motor from standstill.

The pneumatic starting assist system 16 includes a pneumatic motor 22 operably coupled to the electric motor 18. Flowing compressed gas, typically air, (illustrated as arrows 24) passes through and powers the pneumatic motor 22. The compressed gas 24 will be generally identified as air 24 in the remaining discussion for simplicity. However, one of ordinary skill in the art will recognize that other compressed gases such as natural gas, methane, nitrogen may be used in other embodiments according to the principals of the present invention. In one embodiment, the flowing compressed air 24 rotationally drives a turbine rotor 26 coupled to an internal motor gear train 28 within the pneumatic motor 22 to create a rotational output. The rotational output of the turbine rotor 26 is operably transferred to the armature 20, thereby mechanically driving the armature 20. After the armature 20 has reached the electricity application speed, electricity can be applied to electrically drive the armature 20. The electricity application speed is sufficiently fast to substantially reduce if not completely eliminate the time the electric motor 18 appears like a short circuit, thereby reducing the peak inrush current and energy consumption when the electricity for the armature 20 is supplied. While it may be, the electricity application speed need not be the ultimate steady state operating speed of the armature 20. The typical speed at which electricity is applied to achieve the majority of the benefits is approximately 65 to 70% of the steady state operating speed.

In the illustrated embodiment, the pneumatic motor 22 includes its own integrated pneumatic motor gear train 28 and the electric motor 18 includes an auxiliary electric motor gear train 30. These gear trains 28 and 30 form a gear train system interposed between the turbine rotor 26 and the armature 20 to operably transfer the rotational motion of the turbine rotor 26 to the armature 20. The integrated pneumatic motor gear train 28 further is positioned within a housing of the pneumatic motor 22. The pneumatic motor gear train 28 and electric motor gear train 30 are configured such that the pneumatic motor 22 can drive the armature 20 to the electricity application speed and generate appropriate levels of torque to overcome the mass moment of inertia of the armature 20. While the illustrated embodiment includes separate gear trains for the pneumatic motor 22 and the electric motor 18, it will be apparent from the present disclosure to one of ordinary skill in the art that other gear train configurations, such as a single and/or combined gear train, could be employed between and mechanically connecting the turbine rotor 26 and armature 20 in practicing the present invention.

As illustrated, the pneumatic motor gear train 28 includes a pinion gear 34 that couples to and drives a driven gear 36 of the electric motor gear train 30. The pneumatic motor gear train 28 can be configured to alter the rotational output ratio of the pinion gear 34 relative to the turbine rotor 26 to increase or decrease torque or output speed as required by a given application to properly drive driven gear 36.

The driven gear 36 connects to an input shaft 38 of the armature 20 such that rotation of the driven gear 36 drives the armature 20. While the driven gear 36 is llustrated in a simplified form as being directly attached to the input shaft 38, the driven gear 36 could drive other gears within the electric motor gear train 30 and may not be directly attached to the armature 20 or input shaft 38. Such other electric motor gear train configurations would be apparent to one of skill in the art depending on the application, e.g. speed reducing or torque multiplying.

Further, while the gear trains 28, 30 have been described as using gear-to-gear interfaces to transfer torque and rotation from one component to another, namely the turbine rotor 26 to armature 20, it is contemplated that other arrangements may be used such as belt and pulley systems. As such, the term "gear train" will be broad enough to encompass other torque transfer systems, such as, for example only and in no way limiting, belt and pulley, hydraulic coupling, systems, etc.

Further, the driven gear 36 and electric motor gear train 30 are positioned on the opposite side of the electric motor 18 from an output shaft 60 of the electric motor 18. The output shaft 60 is adapted to be coupled to the load 12. Typically, the output shaft 60 connects to an input shaft 62 of the load 12. The output shaft 60 operably transmits the rotational output of the electric motor 18 to the load 12. The pneumatic starting assist system 16 need not be positioned on the opposite side of the electric motor 18 as output shaft 60 and can be positioned on the same side as output shaft 60 of the electric motor 18 depending on the application. For example, if the electric motor is being retrofit with such a starting assist system 16, it may be beneficial to directly couple the starting assist system to the output shaft 60 as that may be the only available location to operably connect the starting assist system 16 to armature 20.

After the electric motor 18 has been started and is electrically driven, it is beneficial to disengage the rotating components of the pneumatic motor 22 from the armature 20. To facilitate disengaging the pneumatic motor 22 from the armature 20, the illustrated embodiment of the pneumatic motor gear train 28 includes a clutch 42. In an engaged condition, the clutch 42 mechanically connects the turbine rotor 26 to the pinion gear 34 such that rotation of the turbine rotor 26 transfers to rotation of the pinion gear 34.

In a disengaged condition, the clutch 42 mechanically disconnects the turbine rotor 26 from the pinion gear 34. In this condition, when the pneumatic motor 22 is activated, rotation of the turbine rotor 26 is not transferred to the pinion gear 34.

Additionally, in an embodiment, the clutch 42 can be an overrunning or one way clutch such that if the driven gear 36 begins to rotate faster than the pinion gear 34, such as after application of the electricity to the electric motor 18 or deactivation of the pneumatic motor 22, the clutch 42 will not transmit torque from the pinion 34 to the rest of the rotating components of the pneumatic motor 22. This overrunning function prevents driving of the pneumatic motor 22 with the electric motor 18. The clutch 42 also prevents driving of the components of the pneumatic motor 22 during steady state operation of the electric motor 18 when the pneumatic motor 22 is deactivated. This extends the operating life and maintenance intervals by preventing unnecessary wear on the components of the pneumatic motor 22, as well as unnecessary additional loading of the electric motor 18. The clutch 42 could include for example an inertia clutch, a sprag clutch, a freewheeling clutch, a friction clutch, or the like.

While the clutch 42 is illustrated as a part of the pneumatic motor gear train 28, the clutch 42 could be formed alternatively as part of the electric motor gear train 30.

Gas line 46 functions to communicate the compressed gas 24 to the pneumatic motor 22 from a gas supply 48. The gas supply 48 can include but is not limited to a compressed air storage tank (not shown) or piping utilizing compressed natural gas as the supply (all local and federal regulations must be followed in using natural gas supply) and a compressor (not shown) driven by standard main power for replenishing the gas supply 48. When the load or system that is being driven by the electric motor 18 is a gas compressor station, the compressed gas from the compressor station pipeline may be used to drive the pneumatic motor rather than requiring installation of a separate dedicated air supply.

Compressed gas 24 from the gas supply 48 enters the pneumatic motor 22 through inlet 49. The inlet 49 typically includes or is coupled to a gas supply valve 50 that controls the compressed gas flow into and through the pneumatic motor 22.

With the gas supply valve 50 open, compressed gas flows into the pneumatic motor 22 through the inlet 49. The flowing compressed gas 24 passes through the turbine rotor 26 and exits through an exhaust 54. The flowing compressed gas 24 transfers kinetic energy to the turbine rotor 26. This mechanical kinetic energy is ultimately used to drive armature 20.

It is a benefit of the present embodiment that the driving medium is compressed air. The exhausted air can be expelled directly into the atmosphere without the need of a return line flare stack or some other method required to comply with emissions regulations. However, alternative embodiments can include an exhaust hose to direct the exhaust air away from the vicinity of the electric motor if desired or in the case of compressed Natural Gas supplies all safety and emissions regulations must be followed.

Further, this configuration provides an endless supply of operating medium and no need to transport or store a separate operating medium that is potentially harmful. A further benefit of the pneumatic motor is that the risk of toxic or messy fluid leaks near the electric motor or clean environments is eliminated.

In the illustrated embodiment, the prime mover system 10 includes a controller 58. The controller 58 connects to the pneumatic motor 22 and the electric motor 18. The controller 58 controls activation and deactivation of the pneumatic motor 22. As such, the controller 58 is coupled to the gas supply valve 50 to control opening the gas supply valve 50 to activate the pneumatic motor 22 and to control closing the gas supply valve 50 to deactivate the pneumatic motor 22. The gas supply valve 50 may be variably positioned to vary the flow 24 to vary the speed of the turbine rotor 26. The controller 58 may be configured to control/vary the positioning of gas supply valve 50.

Along with activation and deactivation of the pneumatic motor 22, the controller 58, or a second controller, could control engagement and disengagement of clutch 42.

In the illustrated embodiment, the controller 58 is also coupled to the electric motor 18. The controller 58 can be configured to initiate supplying electricity to the electric motor 18 once the armature 20 has reached the electricity application speed to reduce or eliminate the large inrush currents identified previously. After the electricity is supplied to the electric motor 18, the controller 58 can then deactivate the pneumatic motor 22 by closing the gas supply valve 50. Alternatively, the gas supply valve 50 can be closed substantially simultaneously with supplying the electricity to the electric motor 18. The controller 58 could be an electronic or mechanical controller. Due to the larger rotational inertia of the armature 20, the pneumatic motor 22 could be turned off prior to supplying electricity. The controller may include memory, electronic circuitry and/or a processor for controlling the gas supply valve and to initiate supplying electricity to the electronic motor 18.

As illustrated, a clutch 66 operably couples the output shaft 60 to the input shaft 62. Similar to clutch 42, clutch 66 can be in an engaged condition to transfer torque or a disengaged condition such that it does not transfer torque. More particularly, in the engaged condition, rotation of the output shaft 60 is transferred to the load input shaft 62 and in a disengaged condition, rotation of the output shaft 60 is not transferred to the load input shaft 62. Being able to switch from an engaged condition to a disengaged condition assists startup. The clutch 66 can be disengaged to prevent the working load 12 from being added to the load the pneumatic motor 22 must overcome during initial startup of the electric motor 18. Once the electric motor 18 has attained a sufficient rotational speed (a load application speed) the clutch can be engaged so that the rotating output shaft 60 drives the input shaft 62, and consequently the load 12. Again the clutch 66 can be configured to prevent or allow over running and prevent back driving of the armature 20. Further, 10 controller 58 can be further configured to control engagement and disengagement of clutch 66.

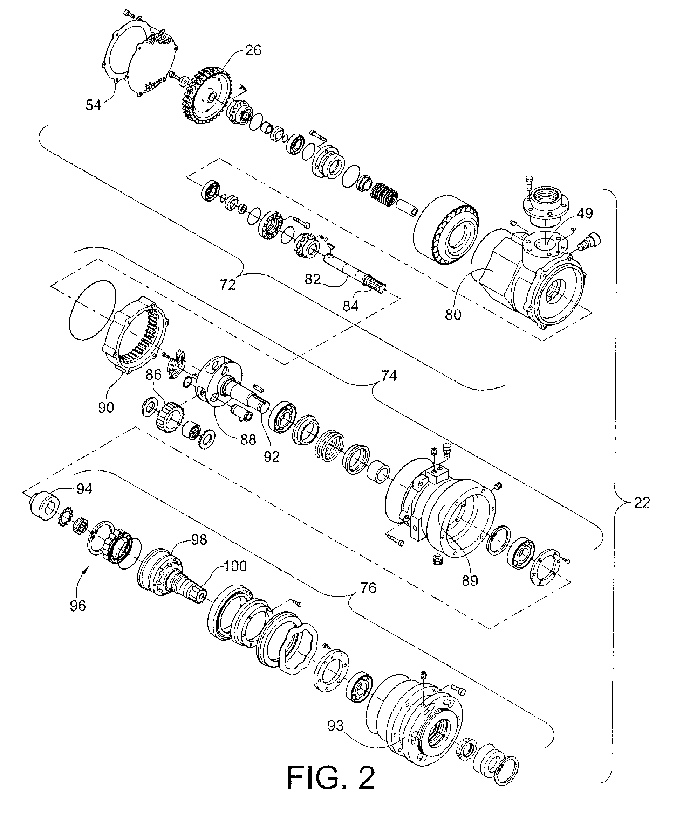

FIG. 2 illustrates an exploded view of one embodiment of a pneumatic motor 22 according to the teachings of the present invention. The illustrated embodiment includes a main drive assembly 72, a gear assembly 74 and a clutch assembly 76. Embodiments of the gear train 28 discussed previously may include any or all of these components to transmit rotation of the turbine rotor 26 to a rotational output of the pneumatic motor 22. It should be noted that this is an exemplary embodiment of a pneumatic motor, it will be readily apparent to one of ordinary skill in the art that alternative or modified pneumatic motors may be used in practicing the invention. For example, alternative embodiments of the pneumatic motor 22 may not include an integrated clutch assembly if the electric motor gear train 30 includes a clutch as discussed previously.

The main drive assembly 72 includes the turbine rotor 26 and turbine nozzle 78 through which the compressed air flows to convert the kinetic energy of the flowing compressed gas into rotational mechanical energy. The turbine rotor 26 is rotationally mounted within a turbine housing 80. The compressed air enters through air inlet 49, passes through the turbine nozzle 78 and the turbine rotor 26 and then exits through exhaust outlet. A turbine shaft 82 is operably coupled to the turbine rotor 26 such that rotation of the turbine rotor 26 results in rotation of the turbine shaft 82. The turbine shaft 82 includes an attachment end 84 that couples the drive assembly 72 to the gear assembly 74.

The gear assembly 74 includes a plurality of planetary gears 86 (only one is illustrated) rotatably carried by a carrier shaft 88. The planetary gears 86 engage and are driven by the turbine shaft 82. The planetary gears 86 also engage ring gear 90. In operation, the ring gear 90 typically remains stationary while the planetary gears 86 and turbine shaft 82 rotate. The carrier shaft 88 couples the gear assembly 74 to the clutch assembly 76.

The clutch assembly 76 includes a sprag race 94 that mounts to the carrier shaft 88. A sprag clutch assembly 96 rides on an outer surface of the sprag race 94 and interior to a sprag shaft 98. The interaction of the sprag clutch assembly 96, sprag race 94 and sprag shaft 98 allows the sprag shaft 98 to over nin the carrier shaft assembly 88 without transmitting torque to the carrier shaft assembly 88. The sprag shaft 98 includes a splined end 99 that can engage a pinion gear (such as pinion 34 in Fig. 1) or may be configured itself as a drive gear to engage a driven gear such as gear 36 in FIG. 1.

The previous embodiment is a turbine motor configuration. However, one of skill in the art will recognize from the present disclosure that other pneumatic motors may be employed in practicing embodiments of the present invention, for example, vane, lobe, screw, or gear pneumatic motors.

While the previous embodiments include only a single pneumatic motor, an embodiment of the prime mover system can include a plurality of pneumatic motors operably coupled to the rotor of the electric motor. In such a onfiguration each pneumatic motor could be controlled to substantially simultaneously mechanically drive the rotor or be driven individually and thereby provide a back-up redundancy. As such, the individual pneumatic motors could be driven by separate gas supply systems or by a single supply system for all pneumatic motors.

Further, when multiple pneumatic motors are used, each pneumatic motor can include its own integrated gear train. Additionally, the use of multiple pneumatic motors can increase the load (i.e. rotor weight, size, inertia, etc.) that can be driven during initial startup of the prime mover system.

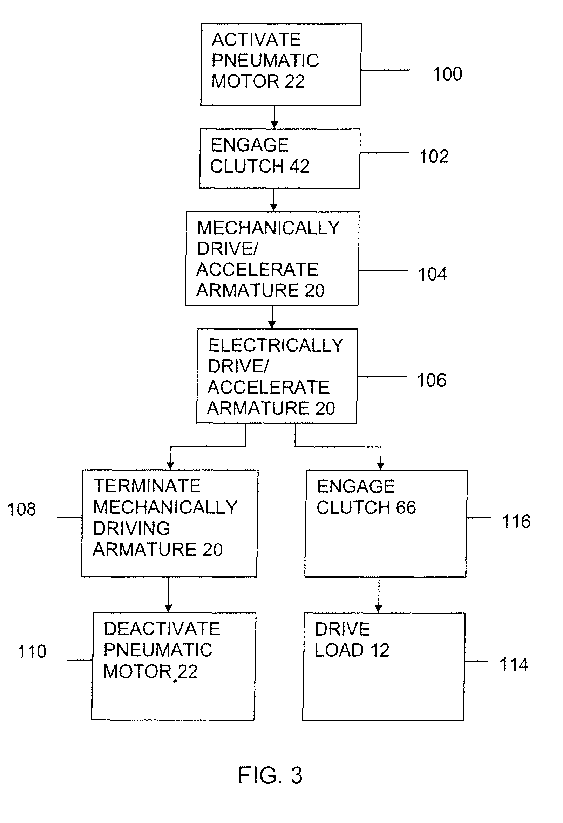

In operation, the prime mover system 10 uses the pneumatic starting assist system 16 to initiate startup of the electric motor 18 to reduce startup peak inrush currents and energy consumption. The pneumatic starting assist system 16 also assists overcoming inertia of the armature 20 at rest. As such, methods of starting electric motor prime movers according to the present invention follow, with particular reference to FIGs. 1 and 3.

The pneumatic motor 22 is activated 100, typically, with the components of the prime mover system 10 initially at rest. To activate the pneumatic motor 22, the gas supply valve 50 proximate the inlet 49 of the pneumatic motor 22 is opened. The gas supply valve 50 can be opened using the controller 58 or could alternatively be manually opened.

Once the supply valve 50 is opened, compressed gas 24 flows from the gas supply 48 through the pneumatic motor 22 and rotationally drives the turbine motor 26. The rotating turbine rotor 26 drives the pneumatic motor gear train 28.

Typically, clutch 42 will be in a disengaged condition at activation 100 and consequently the armature 20 will remain stationary at the initial time of activation 100. In some embodiments, the mere activation 100 of the pneumatic motor 22 will cause the clutch 42 to engage 102. Alternative embodiments require the turbine rotor 26 to attain a predetermined clutch engagement speed prior to engagement 102 of clutch 42. Once the clutch 42 engages 102, the pneumatic motor 22 will mechanically drive and accelerate 104 the armature 20.

It will be apparent to one of ordinary skill in the art from the present disclosure that alternative embodiments that do not include such a clutch or that already have the clutch engaged at activation 100 of the pneumatic motor 22 do not require the step of engaging 102 the clutch 42. In such a configuration, once the step of activation 100 occurs the step of mechanically driving 104 the armature 20 substantially simultaneously occurs. Some slight delay may occur until sufficient gas flow through the turbine rotor 26 has occurred.

With the clutch 42 engaged and the pneumatic motor 22 mechanically driving the armature 20, the armature 20 will accelerate. Once the armature 20 attains a predetermined electricity application speed, electricity is provided to the electric motor 18 to electrically drive 106 the armature 20. As indicated previously, the controller 58 can be configured to control providing the electricity to the electric motor. Because the armature 20 is rotating when the electricity is introduced to electrically drive 106 the electric motor 18, the electric motor 18 does not experience the large inrush current experienced when the electric motor 18 is energized with the armature stationary. Electrically driving 106 the armature 20 can be initiated before, after, or simultaneous with the armature 20 attaining a steady state operating speed. The controller can be selectively user configured or preconfigured accordingly to provide the electricity at any of the given conditions.

With electricity driving the armature 20, the mechanical driving of the armature 20 by the pneumatic motor 22 can be terminated 108. To terminate 108 mechanically driving the armature 20, clutch 42 can be disengaged. This prevents torque from the turbine rotor 26 from being transmitted to the armature 20. Additionally and/or alternatively, the gas supply valve 50 can be closed to deactivate 110 the pneumatic motor 22. Deactivation 110 of the pneumatic motor 22 prevents unnecessary wear and reduction of operating life. It should be noted that clutch 42 may be disengaged (i.e. termination 108) before, after or simultaneously with deactivating 110 the pneumatic motor 22. Further, the termination 108 of mechanically driving the 20 can be performed before or after the armature 20 has attained a steady state operating speed and can be performed once a pneumatic motor deactivation speed has been attained. In one embodiment, the motor deactivation speed is substantially equal to the electricity application speed.

In further methods, the steps of terminating 108 mechanically driving the armature 20 and deactivating 110 the pneumatic motor may occur before or simultaneous with the steps of electrically driving 106 armature 20. The large rotational inertia of the armature 20 will substantially maintain the rotational speed of the armature 20 such that a period of time where the rotating armature 20 is driven, neither, by the starting assist system 16 or electricity will not sufficiently reduce the speed of the rotor prior to applying the electricity to electrically drive 106 the armature 20. Again, controller 58 can be configured or programmed when to terminate 108 mechanically driving or deactivating 110 the pneumatic motor 22.

At some point, the armature 20 will drive 114 load 12. In performing the typical method, electric motor startup will occur with clutch 66 between the output shaft 60 of the armature 20 and the input shaft 62 of the load 12 in a disengaged condition. As such, the typical method includes the step of engaging 116 clutch 66 to drive 114 load 12. The steps of driving 114 the load 12 and engaging 116 clutch 66 occur when the armature 20 has attained a predetermined load driving speed. These steps may occur after or simultaneously with the beginning of the electrically driving step 106 and may occur prior to or after deactivating 110 the pneumatic motor 22. The predetermined load driving speed is typically sufficient such that application of the load 12 to the electric motor 18 does not over load the electric motor 18 causing it to stall.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any nonclaimed element as essential to the practice of the invention.

Preferred embodiments of this invention are described herein, including the preferred mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is ncompassed by the invention unless otherwise indicated herein or otherwise clearly contradicted by context.

Various aspects and embodiments of the present invention will now be defined in the following numbered clauses:
1. A method of activating an electric motor comprising the steps of:
   activating a pneumatic motor;
   driving, mechanically, a rotor of the electric motor with the pneumatic motor; and
   driving, electrically, the rotor.
2. The method of clause 1, further comprising the step of operably coupling a rotational output of the pneumatic motor to the rotor.
3. The method of any preceding clause, further comprising the step of operably uncoupling the rotational output of the pneumatic motor from the rotor.
4. The method of any preceding clause, wherein the step of operably uncoupling the rotational output of the pneumatic motor from the rotor occurs prior to initiation of the step of driving, electrically, the rotor.
5. The method of any preceding clause, wherein the step of driving, electrically, the rotor is initiated after initiation of the step of mechanically driving the rotor.
6. The method of any preceding clause, where the step of driving, electrically, the rotor is initiated when the rotor has reached a speed of approximately 65%-70% of a steady state operating speed.
7. The method of any preceding clause, further comprising the step of deactivating the pneumatic motor.
8. The method of any preceding clause, wherein the step of deactivating the pneumatic motor occurs upon initiation of the step of driving, electrically, the rotor.
9. The method of any preceding clause, wherein the step of deactivating the pneumatic motor occurs prior to the step of driving, electrically, the rotor.
10. The method of any preceding clause, wherein the step of deactivating the pneumatic motor occurs after initiation of the step of driving, electrically, the rotor.
11. A prime mover system for providing motive power to a load, the prime mover system comprising:
   an electric motor having a rotor adapted to be operably coupled to the load; and a first pneumatic motor generating a first rotational output;
   a gear train operably translating the first rotational output to the rotor.
12. The prime mover system of clause 11, further comprising a clutch having a first state in which the first rotational output is transferred to the rotor and a second state in which the first rotational output is not transferred to the rotor.
13. The prime mover system of clause 11 or 12, wherein the clutch is adapted to prevent the rotor from driving the first pneumatic motor.
14. The prime mover system of any of clauses 11 to 13, further comprising a clutch operably connected to the rotor adapted to transfer a rotational output of the rotor to the load in a first state and prevent transfer of the rotational output of the rotor to the load in a second state.
15. The prime mover system of any of clauses 11 to 14, wherein the gear train includes an integrated gear train of the first pneumatic motor and an auxiliary gear train of the electric motor operably coupled together.
16. The prime mover system of clauses 11 to 15, further comprising a controller configured to control a valve for controlling a flow of compressed air through the first pneumatic motor.
17. The prime mover system of any of clauses 11 to 16, further comprising a controller configured to control activation of the pneumatic motor.
18. The prime mover system of any of clauses 11 to 17, further comprising a clutch having a first state in which the first rotational output is transferred to the rotor and a second state in which the first rotational output is not transferred to the rotor, wherein the controller is configured to switch the clutch between the first and second states.

## Claims

1. A method of activating an electric motor (18) comprising the steps of:
activating a pneumatic motor (22);
driving, mechanically, a rotor (26) of the electric motor with the pneumatic motor; and
driving, electrically, the rotor.

2. The method of claim 1, further comprising the step of operably coupling a rotational output of the pneumatic motor (22) to the rotor (26).

3. The method of any preceding claim, further comprising the step of operably uncoupling the rotational output of the pneumatic motor (22) from the rotor (26).

4. The method of claim 3, wherein the step of operably uncoupling the rotational output of the pneumatic motor (22) from the rotor (26) occurs prior to initiation of the step of driving, electrically, the rotor.

5. The method of any preceding claim, wherein the step of driving, electrically, the rotor (26) is initiated after initiation of the step of mechanically driving the rotor.

6. The method of claim 5, where the step of driving, electrically, the rotor (26) is initiated when the rotor (26) has reached a speed of approximately 65%-70% of a steady state operating speed.

7. The method of any preceding claim, further comprising the step of deactivating the pneumatic motor (22).

8. The method of claim 7, wherein the step of deactivating the pneumatic motor (22) occurs upon initiation of the step of driving, electrically, the rotor (26).

9. The method of claim 7, wherein the step of deactivating the pneumatic motor (22) occurs prior to the step of driving, electrically, the rotor (26).

10. The method of claim 7, wherein the step of deactivating the pneumatic motor (22) occurs after initiation of the step of driving, electrically, the rotor (26).

11. A prime mover system (10) for providing motive power to a load, the prime mover system comprising:
an electric motor (18) having a rotor (26) adapted to be operably coupled to the load (12); and a first pneumatic motor (22) generating a first rotational output;
a gear train (30) operably translating the first rotational output to the rotor (26).

12. The prime mover system (10) of claim 11, further comprising a clutch (42) having a first state in which the first rotational output is transferred to the rotor and a second state in which the first rotational output is not transferred to the rotor (26).

13. The prime mover system (10) of claim 12, wherein the clutch (42) is adapted to prevent the rotor (26) from driving the first pneumatic motor (22).

14. The prime mover system (10) of any of claims 11 to 13, further comprising a clutch (42) operably connected to the rotor (26) adapted to transfer a rotational output of the rotor to the load in a first state and prevent transfer of the rotational output of the rotor to the load in a second state.

15. The prime mover system (10) of any of claims 11 to 14, wherein the gear train (30) includes an integrated gear train of the first pneumatic motor (22) and an auxiliary gear train of the electric motor (18) operably coupled together.
